Europäisches Patentamt

European Patent Office

Office européen des brevets

(11) Publication number: **0 254 923 B1**

(12) # EUROPEAN PATENT SPECIFICATION

(45) Date of publication of patent specification: **19.11.92**

(51) Int. Cl.⁵: **B29C 49/24**, B32B 27/00, G09F 3/04

(21) Application number: **87109844.8**

(22) Date of filing: **08.07.87**

(54) **Coextruded plastic film label for in-mold-labeling.**

(30) Priority: **14.07.86 US 885119**

(43) Date of publication of application:
**03.02.88 Bulletin 88/05**

(45) Publication of the grant of the patent:
**19.11.92 Bulletin 92/47**

(84) Designated Contracting States:
**AT BE CH DE FR GB IT LI NL SE**

(56) References cited:
**EP-A- 0 166 624**
**EP-A- 0 237 258**
**WO-A-86/01771**
**WO-A-87/05276**
**US-A- 4 581 262**

(73) Proprietor: **THE DOW CHEMICAL COMPANY**
**2030 Dow Center Abbott Road P.O. Box 1967**
**Midland Michigan 48640-1967(US)**

(72) Inventor: **Dudley, Carol A.**
**750 South Second Street**
**Heath Ohio 43055(US)**

(74) Representative: **Sternagel, Hans-Günther, Dr.**
**et al**
**Patentanwälte Dr. Michael Hann Dr. H.-G.**
**Sternagel Sander Aue 30**
**W-5060 Bergisch Gladbach 2(DE)**

# Description

The present invention relates to labels, especially to labels that are particularly for use in in-mold labeling of blow-mold polyethylene containers. More particularly, the present invention relates to a coextruded plastic film label for use in such in-mold labeling applications.

From US-A-4,581,262 a coextruded multi layer sheet is known comprising a foam layer and an outer skin layer. The foam layer may be of polystyrene, copolymers of styrene and a vinyl copolymerizable monomer such as vinyl acetate, vinyl chloride, vinylidene chloride, methylmethacrylate, ethylmethacrylate.

The skin layer may have the same composition of the foam layer or comprise a blend of 35 to 60 percent by weight of high density polyethylene, 10 to 30 weight percent of polystyrene and about 30 to 50 weight of a compatibility agent such as a copolymer of styrene and butadiene.

The in-mold labeling of blow-mold polyethylene containers, particularly blow molded high density polyethylene containers allows the manufacturer to readily and inexpensively produce labeled containers directly from the molding operation without the need to apply adhesively backed labels in a subsequent step. By eliminating subsequent handling and adhesive applying operations capital investment and handling costs are substantially reduced. However, in-mold labeling equipment requires the cooperation of various mechanical devices which operate at relatively high speeds. Labels are supplied from a magazine and individually positioned by a mechanical or vacuum operated device inside of a mold which is thereafter closed and the molded thermoplastic object prepared. Blow molding is a suitable molding process wherein a parison of heat plastified thermoplastic resin, most generally high density polyethylene, is extruded and then expanded to conform to the inner surface of a mold. The label, which also must conform to the inner surface of the mold, must be held in place until contacted with the heat plastified thermoplastic resin and thereafter must become attached to the resulting object by means of a heat activated adhesive contained on the surface of the label.

The entire procedure must be carried out in a continuous and rapid manner. The supply of labels from a suitable magazine, the positioning of the label within the mold, and the blow molding procedure must proceed in an uninterrupted manner in order to attain desired economical level of operation. Accordingly, labels for use in in-mold labeling processes are required to meet demanding performance requirements. Suitably, the labels must be sufficiently stiff that wrinkling or folding does not occur during handling by the automated equipment. Contrarywise, the labels are required to be sufficiently elastic or flexible that upon attachment to the desired blow molded object they will remain adhered thereto without splitting or separating despite bending, flexing, or squeezing of the finished container.

For certain applications the container, especially shampoo containers, laundry detergent containers, etc. may be exposed to high humidity or water. The adhesive used to adhere the label to such a container should desirably resist the effects of moisture which may lead to delamination or wrinkling of the label.

A further requirement of in-mold labels is the presence of a suitable surface appearance. It is highly desirable from an esthetical and consumer acceptance point of view that the label not affect graphics or printing appearing on the surface thereof. Because thermoplastic scrap generated in the manufacture of coextruded films is desirably reused by recycling, i.e., regrinding and remelting, and incorporating the same into a separate inner layer of the film, it is highly desirable in the preparation of such labels that such scrap containing layer within the label not affect surface qualities of the label itself. WO 87/05276 which is a document under Article 54(3) EPC describes labels for in-mold labeling made from paper strips and a plastic barrier and a heat sensitive adhesive applied to the inner surface of the label.

Finally, previously known in-mold labels prepared from cellulosic base stocks, such as paper, have proven undesirable in operation because the recycle of scrap blow-molded objects having such labels affixed thereto requires tedius mechanical means or solvents to first remove the labels. In order to reclaim or recycle such bottles, particularly defective bottles prepared during the blow-molding process, it is first necessary to remove the paper labels. Contamination by residual adhesive and small portions of unremoved paper may make it practically impossible to reclaim defective blow-molded containers bearing such labels. As an alternate means of disposal, defective containers must be burned or buried in landfills both of which practices are wasteful and undesirable.

It is the object of the invention to provide a polymeric label particularly adapted for use in in-mold labeling of blow-molded polyethylene containers.

This object is attained by an adhesive label particularly adapted for use in the in-mold labeling of blow-molded polyethylene containers comprising coextruded layers of:

(1) a heat activatable adhesive substrate layer of a polymer selected from mixtures of either: (a) homopolymers of ethylene; (b) copolymers of ethylene with one or more $\alpha$-olefins having from

4 to 8 carbon atoms; (c) mixtures of (a) and (b); with up to 95 percent, preferably up to 50 percent, by weight of a copolymer comprising ethylene and from 1 to 30 percent by weight of a copolymerizable ethylenically unsaturated carboxyl containing comonomer and

(2) a surface printable layer comprising polystyrene; and

wherein the label having a 1 percent secant modulus measured according to ASTM-D-882 of from $1,034 \times 10^9$ to $4,136 \times 10^9$ Pa (150,000 to 600,000 lbs /inch$^2$) and a thickness from 0.025 to 0.25 mm (0.001 to 0.010 inches).

According to another embodiment the adhesive label particularly for use in the inmold labeling of blow-molded polyethylene containers comprising coextruded layers of

(1) a heat activatable adhesive substrate layer of a polymer selected from: (a) homopolymers of ethylene; (b) copolymers of ethylene with one or more $\alpha$-olefins having from 4 to 8 carbon atoms; (c) mixtures of (a) and (b);

(2) an interlayer of a copolymer comprising ethylene and from 1 to 30 percent by weight of a copolymerizable ethylenically unsaturated carboxyl containing comonomer; and

(3) a surface printable layer comprising polystyrene; and

wherein the label having a 1 percent secant modulus measured according to ASTM-D-882 of from $1,034 \times 10^9$ to $4,136 \times 10^9$ Pa (150,000 to 600,000 lbs /inch$^2$) and a thickness from 0.025 to 0.25 mm (0.001 to 0.010 inches).

The label according to the invention combines suitable properties of modulus of elasticity and flexibility, and at the same is adaptable to in-mold processing conditions and not degraded by flexing and handling of the subsequent container.

The label for use in in-mold labeling applications is unaffected by moisture or high humidity environments.

The label for in-mold labeling operations does not have to be removed from such containers in order to recycle or regrind defective thermoplastic containers for subsequent incorporation into the thermoplastic.

In one embodiment of the invention, the heat activatable adhesive substrate layer of the present invention desirably comprises a polyethylene polymer. Suitable polyethylene polymers include high density polyethylene, low density polyethylene, linear low density polyethylene and blends thereof. In this embodiment, it is desirable to insert an interlayer between the adhesive substrate layer and the surface printable layer in order to obtain suitable adhesion therebetween. In this case, the interlayer comprises a copolymer of ethylene and from 1 percent to 30 percent by weight of a copolymerizable ethylenically unsaturated carboxy containing comonomer. Preferred copolymers contain from 5 percent to 25 percent by weight of the copolymerizable ethylenically unsaturated carboxyl containing comonomer.

As previously mentioned, the heat activatable adhesive substrate may also comprise the aforementioned polyethylene polymer blended with up to 95 percent, preferably up to 50 percent, by weight of a copolymer of ethylene and from 1 percent to 30 percent by weight of a copolymerizable ethylenically unsaturated carboxyl containing comonomer. In such an embodiment, the interlayer adhered between the adhesive substrate and the surface printable substrate may be eliminated. When amounts of carboxy containing comonomer greater than about 95 percent are employed, difficulty in film preparation and handling may be encountered.

Copolymerizable ethylenically unsaturated carboxyl containing comonomers for use herein include ethylenically unsaturated carboxylic acids and esters thereof having up to 12 carbons. Examples include acrylic acid, methacrylic acid, methylmethacrylate, butyl acrylate, vinyl acetate, and the like. A preferred ethylenically unsaturated carboxyl containing comonomer is vinyl acetate.

A preferred heat activatable adhesive substrate comprises a blend of from 50 to 75 percent of low density polyethylene and from 50 to 25 percent of a copolymer of ethylene and vinyl acetate, said copolymer containing from 5 to 25 percent vinyl acetate. A most preferred heat activatable adhesive substrate comprises from 60 to 70 percent low density polyethylene and from 40 to 30 percent ethylene/vinyl acetate copolymer.

The surface printable layer comprises polystyrene, and is adapted to receive printing ink, dyes, metal films, and the like and provide a smooth defect-free surface. Generally, pigment or fillers are provided in order to provide a suitable background for printing, and to hide refractive index changes in the other layers of the label or any blemishes or other defects appearing in the layer of reground and recycled polymer. A suitable surface printable layer comprises from 75 to 98 percent by weight of polystyrene and from 25 to 2 percent by weight of a suitable pigment, or filler. Examples of pigments include titanium dioxide, carbon black, and the like. Suitable fillers include calcium carbonate, silica, talc, and the like A particularly preferred pigment is titanium dioxide.

It is furthermore desirable in operation, that the labels of the present invention additionally include a layer interposed between the adhesive substrate and the surface printable layer that comprises reground and recycled thermoplastic material employed to prepare such labels. Significant waste occurs in the manufacturing of films used to prepare labels both in the generation of defective films, and in cuttings and trimmings left over from sizing and die-cutting of the desired shaped films and labels. Unless such waste is reground, remelted and included in the film stock, a significant economic loss is incurred. Accordingly, in a preferred embodiment of the present invention, a scrap or reground layer is interposed between the heat activatable adhesive substrate layer and the surface printable layer. Where the resulting structure comprises four layers, it is desirable that such reground layer be placed adjacent to the surface printable layer. The reground layer may comprise up to 50 percent by weight of reground label material with the balance comprising pigments, fillers and polystyrene. Because the reground layer may contain color bodies and have a marbled or swirled appearance, the surface printable layer desirably contains sufficient pigment so as to hide or cover over such defects appearing in additional layers of the label.

Because the labels of the present invention are adhered to the polyethylene blow-molded container by melt adhesion of the heat activatable adhesive substrate an exceedingly strong adhesive bond is attained between the labels of the present invention and the blow-molded container. This bond is unaffected by the presence of water or high humidity which may cause delamination of adhesive applied in the form of dispersions and is also unaffected by flexing or bending of the underlying blow-molded container.

In addition, the absence of a noncompatible adhesive coating is believed to aid in producing a compatible blend upon regrinding and remelting of scrap containers. More particularly, defects such as swirls appearing in the reground layer are reduced by eliminating such an adhesive coating.

In order to operate most smoothly in the in-mold labeling process, the label of the present invention preferably has a 1 percent secant modulus of from $1.378 \times 10^9$ to $2.758 \times 10^9$ Pa (200,000, to 400,000 pounds/in$^2$) and a thickness of from 0.05 to 0.127 mm (0.002 to 0.005 inches).

Generally, any of the various layers in the label of the present invention may comprise from 10 to 50 percent of the total label thickness.

The label of the invention may be prepared by any suitable technique such as laminating of the various layers. Preferably a label stock is prepared by coextrusion of the various label layers utilizing coextrusion techniques previously known in the art. Suitably, the resins to be used in the various layers are separately heat plastified and extruded through a multi-feedblock die in the form of a thin sheet or film. Alternatively, the extrusion is in the form of a tube which is later expanded by use of compressed air or an expansion mandrel to provide a thin film comprising the various layers according to the present invention. After cooling and slitting into a suitable width film, the labels are printed and die cut according to known techniques. Advantageously, because separately applied adhesive is not employed, the labels may be conveniently and economically prepared.

## Claims

1. An adhesive label particularly for use in the in-mold labeling of blow-molded polyethylene containers comprising coextruded layers of

   (1) a heat activatable adhesive substrate layer of a polymer selected from: (a) homopolymers of ethylene; (b) copolymers of ethylene with one or more α-olefins having from 4 to 8 carbon atoms; (c) mixtures of (a) and (b);

   (2) an interlayer of a copolymer comprising ethylene and from 1 to 30 percent by weight of a copolymerizable ethylenically unsaturated carboxyl containing comonomer; and

   (3) a surface printable layer comprising polystyrene; and

   wherein the label having a 1 percent secant modulus measured according to ASTM-D-882 of from $1,034 \times 10^9$ to $4,136 \times 10^9$ Pa (150,000 to 600,000 lbs/inch$^2$) and a thickness from 0.025 to 0.25 mm (0.001 to 0.010 inches).

2. An adhesive label particularly adapted for use in the in-mold labeling of blow-molded polyethylene containers comprising coextruded layers of:

   (1) a heat activatable adhesive substrate layer of a polymer selected from: mixtures of either

      (a) homopolymers of ethylene;

      (b) copolymers of ethylene with one or more α-olefins having from 4 to 8 carbon atoms;

      (c) mixtures of (a) and (b) with up to 95 percent, preferably up to 50 percent by weight of a copolymer comprising ethylene and from 1 to 30 percent by weight of a copolymerizabel ethylenically unsaturated comonomer,

   (2) a surface printable layer comprising polystyrene; and

   wherein the label having a 1 percent secant modulus measured according to ASTM-D-882 of from $1,034 \times 10^9$ to $4,136 \times 10^9$ Pa (150,000 to 600,000 lbs/inch$^2$) and a thickness from 0.025 to 0.25 mm (0.001 to 0.010 inches).

3. The label according to claims 1 or 2,
**characterized by**
having a 1 percent secant modulus measured according to ASTM-D-882 from $1.378 \times 10^9$ to $2.758 \times 10^9$ Pa (200,000 to 400,000 lb/in²).

4. The label according to claims 1 or 2,
**characterized by**
having a thickness from 0.05 to 0.127 mm (0.002 to 0.005 inches).

5. The label according to claims 1 or 2,
**characterized in that**
the surface printable layer comprises from 30 to 2 percent by weight of a pigment filler and from 70 to 98 percent by weight of polystyrene.

6. The label according to claims 1 or 2,
**characterized by**
additionally containing a layer interposed between a substrate layer and the surface printable layer comprising reground and recycled thermoplastic label material.

7. Use of the label according to any of claims 1 to 6 for in-mold labeling of blow-mold polyethylene containers.

**Patentansprüche**

1. Haftetikett, insbesondere zur Verwendung beim Etikettieren in der Form von blasgeformten Polyethylenbehältern mit coextrudierten Schichten aus
(1) einer durch Wärme aktivierbaren Klebstoffträgerschicht aus einem Polymer, ausgewählt aus: (a) Ethylenhomopolymeren, (b) Copolymeren von Ethylen mit einem oder mehreren α-Olefinen mit 4-8 Kohlenstoffatomen, (c) Mischungen von (a) und (b),
(2) einer Zwischenschicht aus einem Copolymer, enthaltend Ethylen und von 1-30 Gew.-% eines copolymerisierbaren, ethylenisch ungesättigten, carboxylhaltigen Comonomeren, und
(3) einer bedruckbaren, Polystyrol enthaltenden Oberflächenschicht,
und wobei das Etikett einen 1% Sekantenmodul, bestimmt nach ASTM-D-882 von $1,034 \times 10^9$ bis $4,136 \times 10^9$ Pa (150.000 bis 600.000 lbs/Inch²) und eine Dicke von 0,025 bis 0,25 mm (0,001 bis 0,010 Inch) aufweist.

2. Haftetikett, insbesondere angepaßt zur Verwendung beim Etikettieren in der Form von blasgeformten Polyethylenbehältern mit coextrudierten Schichten aus

(1) einer durch Wärme aktivierbaren Klebstoffträgerschicht aus einem Polymer, ausgewählt aus:
Mischungen von irgendeinem (a) Ethylenhomopolymeren, (b) Copolymeren von Ethylen mit einem oder mehreren α-Olefinen mit 4-8 Kohlenstoffatomen, (c) Mischungen von (a) und (b) mit bis zu 95 Gew.-%, vorzugsweise bis zu 50 Gew.-%, eines Copolymeren, enthaltend Ethylen und von 1-30 Gew.-% eines copolymerisierbaren, ethylenisch ungesättigten Comonomeren,
(2) einer bedruckbaren, Polystyrol enthaltenden Oberflächenschicht,
und wobei das Etikett einen 1% Sekantenmodul, bestimmt nach ASTM-D-882 von $1,034 \times 10^9$ bis $4,136 \times 10^9$ Pa (150.000 bis 600.000 lbs/Inch²) und eine Dicke von 0,025 bis 0,25 mm (0,001 bis 0,010 Inch) aufweist.

3. Etikett nach Ansprüchen 1 oder 2,
**dadurch gekennzeichnet,**
daß es einen 1% Sekantenmodul, bestimmt nach ASTM-D-882 von $1,378 \times 10^9$ bis $2,758 \times 10^9$ Pa (200.000 bis 400.000 lbs//Inch²) aufweist.

4. Etikett nach Ansprüchen 1 oder 2,
**dadurch gekennzeichnet,**
daß es eine Dicke von 0,05 bis 0,127 mm (0,002 bis 0,005 Inch) aufweist.

5. Etikett nach Ansprüchen 1 oder 2,
**dadurch gekennzeichnet,**
daß die bedruckbare Oberflächenschicht von 30-2 Gew.-% eines Pigmentfüllstoffes und von 70-98 Gew.-% Polystyrol enthält.

6. Etikett nach Ansprüchen 1 oder 2,
**dadurch gekennzeichnet,**
daß es zusätzlich eine Schicht zwischen der Trägerschicht und der bedruckbaren Oberflächenschicht aufweist, die wiedergemahlenes und zurückgewonnenes thermoplastisches Etikettmaterial enthält.

7. Verwendung des Etiketts nach jedem der Ansprüche 1-6 zum Etikettieren in der Form von blasgeformten Polyethylenbehältern.

**Revendications**

1. Une étiquette adhésive, en particulier pour être utilisée dans l'étiquetage dans le moule de conteneurs en polyéthylène moulés par soufflage, comprenant des couches co-extrudées de :
(1) une couche de substrat adhésif pouvant être activé par la chaleur, en un polymère choisi parmi : (a) des homopolymères d'éthylène ; (b) des copolymères d'éthylène avec une ou plusieurs α-oléfines ayant de 4 à 8 atomes de carbone ; (c) des mélanges de (a) et (b) :

(2) une couche intermédiaire d'un copolymère comprenant de l'éthylène et de 1 à 30 pour cent en poids d'un comonomère contenant du carboxyle non-saturé éthyléniquement copolymérisable ; et

(3) une couche de surface pouvant être imprimée, comprenant du polystyrène ; et l'étiquette présentant un module de sécante à 1 pour cent mesuré suivant ASTM-D-882 de 1,034 x 10$^9$ à 4,136 x 10$^9$ Pa (150 000 à 600 000 lbs/pouce carré) et une épaisseur de 0,025 à 0,25 mm (0,001 à 0,010 pouce).

2. Une étiquette adhésive, particulièrement adaptée pour être utilisée dans l'étiquetage dans le moule de conteneurs en polyéthylène moulés par soufflage, comprenant des couches co-extrudées de :

(1) une couche de substrat adhésif pouvant être activé par la chaleur, en un polymère choisi parmi : des mélanges de l'un ou l'autre parmi :

(a) des homopolymères d'éthylène ;

(b) des copolymères d'éthylène avec une ou plusieurs α-oléfines ayant de 4 à 8 atomes de carbone ;

(c) des mélanges de (a) et (b) avec jusqu'à 95 pour cent, de préférence jusqu'à 50 pour cent, en poids d'un copolymère comprenant de l'éthylène et de 1 à 30 pour cent en poids d'un comonomère nonsaturé éthyléniquement copolymérisable;

(2) Une couche de surface pouvant être imprimée, comprenant du polystyrène : et l'étiquette présentant un module de sécante à 1 pour cent mesuré suivant ASTM-D-882 de 1,034 x 10$^9$ à 4,136 x 10$^9$ Pa (150 000 à 600 000 lbs/pouce carré) et une épaisseur de 0,025 à 0,25 mm (0,001 à 0,010 pouce).

3. L'étiquette suivant la revendication 1 ou 2, caractérisée par le fait qu'elle présente un module de sécante à 1 pour cent mesuré suivant ASTM-D-882 de 1,378 x 10$^9$ à 2,758 x10$^9$ Pa (200 000 à 400 000 lbs/pouce carré).

4. L'étiquette suivant la revendication 1 ou 2, caractérisée par le fait qu'elle présente une épaisseur de 0,05 à 0,127 mm (0,002 à 0,005 pouce).

5. L'étiquette suivant la revendication 1 ou 2, caractérisée en ce que la couche de surface pouvant être imprimée comprend de 30 à 2 pour cent en poids d'une charge de pigment et de 70 à 98 pour cent en poids de polystyrène.

6. L'étiquette suivant la revendication 1 ou 2, caractérisée par le fait qu'elle contient, en outre, une couche interposée entre une couche de substrat et la couche de surface pouvant être imprimée, comprenant un matériau d'étiquette thermoplastique rebroyé et recyclé.

7. Utilisation de l'étiquette suivant l'une des revendications 1 à 6 pour l'étiquetage dans le moule de conteneurs en polyéthylène moulés par soufflage.